# EUROPEAN PATENT SPECIFICATION

(11) **EP 3 201 149 B1**
(45) Date of publication and mention of the grant of the patent: **12.02.2020**
(21) Application number: 15845659.0
(22) Date of filing: 01.10.2015
(51) Int. Cl.: C03C 23/00, C03C 21/00

(54) **METHOD FOR MANUFACTURING PATTERNED ION-EXCHANGED SUBSTRATES**
VERFAHREN ZUR HERSTELLUNG VON STRUKTURIERTEN IONENAUSTAUSCHSUBSTRATEN
PROCÉDÉS DE FABRICATION DE SUBSTRATS À MOTIFS À IONS ÉCHANGÉS

(30) Priority: 03.10.2014 US 201462059516 P
(43) Date of publication of application: 09.08.2017
(73) Proprietor: Corning Incorporated, Corning, New York 14831 (US)
(72) Inventor: GOMEZ, Sinue, Corning, New York 14830 (US); GUO, Xiaoju, Painted Post, New York 14870 (US); HU, Guangli, Berkeley Heights, NJ 07922 (US); SMITH, Nicholas James, State College, PA 16803 (US); TANG, Zhongzhi, Painted Post, New York 14870 (US); ZHOU, Chunfeng, Painted Post, New York 14870 (US)
(74) Representative: Epping - Hermann - Fischer
(86) International application number: PCT/US2015/053454
(87) International publication number: WO 2016/054349

(56) References cited:
- DE-A1- 3 525 661
- KR-A- 20130 132 608
- US-A- 4 913 717
- US-A- 5 192 402
- US-A1- 2012 236 477
- US-A1- 2013 059 717
- BRENNAND, ALR: THERMAL POLING OF MULTIOXIDE SILICATE GLASSES AND ION-EXCHANGED WAVEGUIDES, September 2002 (2002-09), page 21, XP055423811, UNIVERSITY OF SOUTHAMPTON
- BRENNAND, ALR THERMAL POLING OF MULTIOXIDE SILICATE GLASSES AND ION-EXCHANGED WAVEGUIDES September 2002, UNIVERSITY OF SOUTHAMPTON, page 21, XP055423811

## Description

### CROSS-REFERENCE TO RELATED APPLICATIONS

### FIELD OF THE DISCLOSURE

The disclosure relates generally to patterned ion-exchanged automobile windshields and to methods for making patterned chemically-strengthened glass sheets using poling techniques and ion exchange processes.

### BACKGROUND

Glass sheets are commonly used in a wide variety of applications, including various electronics, such as cell phones, laptops, electronic tablets, televisions, and computer monitors, as well as appliances such as refrigerators, dishwashers, ovens, and microwaves. Other non-limiting applications include architectural elements, e.g., elevator wall panels; furniture elements, such as furniture panels; and decorative or functional elements for automobiles, such as windshields, sunroofs, and door or pillar panels. For various applications, it can often be advantageous to employ chemically-strengthened glass sheets, such as Gorilla® Glass from Corning Incorporated. For example, chemically-strengthened glasses have wide-spread application in touch panels and portable display devices due to their improved strength and damage resistance. In particular, glass cover sheets for electronic devices are often chemically-strengthened to withstand a high level of contact and resist potential damage. Chemically-strengthened glass sheets can have improved damage resistance due to surface compression layers formed in the glass substrate due to ion exchange. The surface compression can be balanced by a tensile region in the interior of the substrate. However, the magnitude of compressive stress and the elastic energy stored in the interior tensile region of the glass can make mechanical cutting of the substrates difficult. For example, when the compressive layer is punctured, e.g., by cutting or impact, the integral energy of the glass may be released and can result in fragmentation of the glass.

Applicant has conducted various studies relating to mechanical cutting of chemically-strengthened glass. Emerging methods for cutting chemically-strengthened glasses include limiting the central tensile stress to keep the glass from shattering. Such methods may be successful with strengthened glasses having lower compressive stress and/or smaller depth of layer of compressive stress (DOL), such as soda-lime glasses. However, chemically-strengthened glasses such as Gorilla® Glass can have a high central tension that poses problems for mechanical cutting. Laser techniques for cutting chemically-strengthened glass sheets have also been studied by Applicant, but these techniques can still be limited in terms of commercial readiness and/or availability.

As such, most chemically-strengthened glass articles are made by a piece-part process, e.g., the part is cut from a sheet of glass and edge-finished to shape before it is chemically strengthened, such as by ion exchange. Such processes can, however, have ramifications in terms of production cost and/or complexity. Accordingly, it would be advantageous to provide methods for making chemically-strengthened glass substrates that can be subsequently cut using conventional mechanical cutting methods.

Moreover, from a safety standpoint, while chemically-strengthened glass often breaks into smaller pieces upon mechanical impact as compared to non-chemically-strengthened glass, these fragments can still have sharp corners, which can pose potentially safety concerns to the customer. In particular, for automobile applications, it may be desirable to avoid sharp broken glass fragments upon impact or collision to avoid secondary injuries to the driver and/or passengers due to glass breakage. It would thus also be advantageous to provide chemically-strengthened glass substrates that exhibit a desired or controllable breakage pattern to minimize safety concerns during customer usage.

DE 3525661 A1 relates to a Process for field-assisted ion exchange, in which the surface of a substrate containing the ions migrating outwards is brought into contact with a liquid medium which contains the ions migrating inwards, and there is applied to the substrate an electric field which assists the inward migration of the ions from the liquid medium into the substrate at the one surface of the substrate and the outward migration of the ions from the substrate at the other surface of the substrate, said substrate being arranged between two horizontal electrodes, and said liquid medium being introduced between at least one of the electrodes and the substrate, the spacing between said electrode and the substrate being set in such a way that owing to the surface tension of the liquid medium the latter cannot flow away, and an electrically conductive layer being introduced between the other electrode and the substrate.

US 4913717 A relates to a method for fabricating buried waveguides on a glass substrate which contains sodium ions includes the steps of masking the substrate, performing a field-assisted ion-exchange process at low temperature to form waveguides by exchanging silver ions for the sodium ions, and performing a field-assisted ion-exchange at low temperature to bury the waveguides by exchanging potassium ions.

US 5192402 A relates to a method of dealkalizing a glass body that contains at least one alkali metal ion as either an impurity or an intentionally added constituent. The method involves intimately contacting the glass body with a hydrogen-ion-producing anode and an oxide receptor for the alkali metal ion as a cathode and exposing the glass body and electrode assembly to hydrogen while the assembly is at an elevated temperature.

Brennand, Andre Luiz Ribeiro (2002) Thermal poling of multioxide silicate glasses and ion-exchanged waveguides. University of Southampton, Department of Electronics and Computer Science, Doctoral Thesis reports a theoretical and experimental study of thermal poling of glasses in which a second order optical nonlinearity is introduced into the glass by applying a potential across the glass at elevated temperature.

### SUMMARY

The disclosure relates to a method for chemically-strengthening a glass substrate according to claim 1 and an automobile windshield according to claim 10. Preferred embodiments are set forth in the dependent claims.

Additional features and advantages of the disclosure will be set forth in the detailed description which follows, and in part will be readily apparent to those skilled in the art from that description or recognized by practicing the methods as described herein, including the detailed description which follows, the claims, as well as the appended drawings.

It is to be understood that both the foregoing general description and the following detailed description present various embodiments of the disclosure, and are intended to provide an overview or framework for understanding the nature and character of the claims. The accompanying drawings are included to provide a further understanding of the disclosure, and are incorporated into and constitute a part of this specification. The drawings illustrate various embodiments of the disclosure and together with the description serve to explain the principles and operations of the disclosure.

### BRIEF DESCRIPTION OF THE DRAWINGS

The following detailed description can be further understood when read in conjunction with the following drawings.
**FIG. 1** illustrates a process flow diagram for methods according to various embodiments of the disclosure;
**FIG. 2** illustrates a patterned surface of a substrate according to certain embodiments of the disclosure;
**FIGS. 3A-E** illustrate elemental depth profiles measured using secondary ion mass spectrometry (SIMS) for thermally poled and non-thermally poled regions of an exemplary glass substrate;
**FIG. 4** is a cross-sectional scanning electron microscope (SEM) image of an exemplary glass substrate; and
**FIG. 5** illustrates electron microprobe analysis (EMPA) linescans for the surfaces of the glass substrate depicted in FIG. 4.

### DETAILED DESCRIPTION

### Methods

Disclosed herein are methods for chemically-strengthening a glass substrate, the methods comprising applying a first electrode to at least one first region on a first surface of the glass substrate and applying a second electrode to at least one second region on a second surface of the glass substrate, wherein the glass substrate comprises metal ions; applying voltage between the first and second electrodes sufficient to cause at least a portion of the metal ions to migrate away from the at least one first region on the first surface; and chemically strengthening the glass substrate by ion exchange.

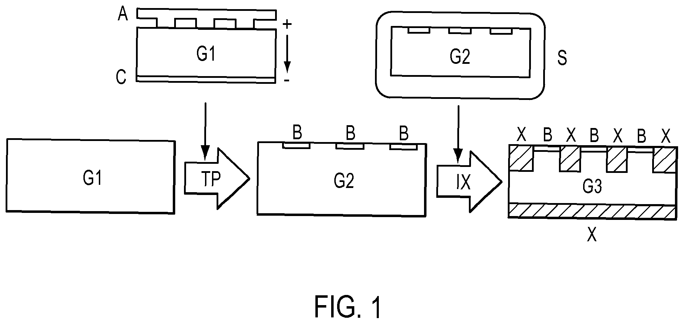

Methods according to the disclosure will be discussed herein with reference to **FIG. 1****,** which depicts a non-limiting flow diagram outlining exemplary method steps. According to various embodiments, a substrate **G1,** such as a glass, glass-ceramic, or ceramic substrate containing mobile ions, such as metal ions chosen from alkali metal ions, alkaline earth metal ions, and/or transition metal ions, can be treated using a thermal poling process **TP,** in which the substrate **G1** is placed between two electrodes **A** (anode) and **C** (cathode). The stack thus formed can then be heated in some embodiments, e.g., to a temperature between room temperature (about 25°C) and, e.g., a glass transition temperature (T_{g}) of the substrate. Voltage can then be applied to the electrodes such that the anode **A** is positively-biased relative to the substrate, which can induce mobile ion migration away from the regions in contact with the anode **A.** The thermally poled (patterned) substrate **G2** thus formed can comprise regions within the surface having barrier (or blocking) layers **B** substantially free of the mobile ions. The patterned substrate **G2** can then undergo ion exchange **IX** which, in some embodiments, can include submerging the patterned substrate **G2** in a molten salt bath **S** for a predetermined period of time. The ion exchange process **IX** can, in certain embodiments, chemically strengthen the substrate. After ion exchange, the patterned ion-exchanged substrate **G3** can comprise a surface with barrier layer regions **B** and ion-exchanged regions **X,** and, in certain embodiments, an opposing surface comprising an ion-exchanged region **X.** As discussed in more detail below, various electrode configurations and ion exchange techniques can yield substrates having a variety of patterned or unpatterned surfaces.

According to methods disclosed herein, a substrate **G1** can be processed using a thermal poling treatment to produce one or more regions on a surface of the substrate comprising a layer with a modified composition substantially depleted of mobile ions, e.g., metal cations. As used herein, the terms "substantially free," "substantially depleted," "substantially devoid," and variations thereof are intended to denote that the specified region(s) of the substrate do not comprise any, or comprise only nominal amounts of mobile ions such as alkali metal ions, alkaline earth metal ions, and/or transition metal ions. For example, "substantially free" and variations thereof can denote that the region comprises less than about 3% by weight of alkali, alkaline earth, and/or transition metal ions, such as less than about 2%, less than about 1%, less than about 0.5%, less than about 0.2%, or less than about 0.1% by weight.

The thermal poling process **TP** can be carried out by placing electrodes in contact with opposing surfaces of the substrate and applying voltage, e.g., DC voltage or AC voltage with a DC bias, between the electrodes. The surface subjected to positive DC bias is referred to herein as the "anode side" or "anodic" surface of the substrate. For purposes of discussion, this surface is also referred to as the "first" surface, although this is not intended to be limiting on the appended claims. The first electrode or anode **A** can, in various embodiments, comprise any material that is more conductive than the substrate at the poling temperature, which can provide enhanced field uniformity over the surface. It can also be advantageous to select a material for the anode that is sufficiently resistance to oxidation to minimize or prevent the formation of oxide compounds at the interface between the anode and the substrate surface, which could otherwise cause the substrate to stick to the electrode. Non-limiting exemplary anode materials include, but are not limited to, noble metals such as Au, Ag, Pt, and Pd; metals such as Cu and Al; metal alloys; and oxidation-resistant conductive films such as TiN and TiAIN, to name a few. In certain embodiments, graphite can also be used as an anode material.

The surface subjected to negative DC bias is referred to herein as the "cathode side" or "cathodic" surface of the substrate. For purposes of discussion, this surface is also referred to as the "second" surface, although this is not intended to be limiting on the appended claims. The first electrode or cathode C can also comprise any material that is more conductive than the substrate at the poling temperature, which can provide enhanced field uniformity over the surface. It can also be advantageous to select a material for the cathode that is capable of accepting ions from the substrate. Non-limiting exemplary cathode materials include, but are not limited to, graphite, spinel, phosphates, metals, metal alloys, or other suitable cathode materials, to name a few. In certain embodiments, the metals and films disclosed above with respect to the anode can also be used as materials for the cathode, and vice versa.

The first and second electrodes can, in some embodiments, be separate components that can be brought into contact with the substrate surfaces, which can then be separated after processing without complex removal steps. The electrodes can be a bulk material, or they can take the form of a thin film, such as a conductive thin film deposited on the substrate surface(s). The first and second electrodes can cover all or part of the surface with which they are in contact. For example, in some embodiments, the first electrode (or anode) can contact one or more portions, or first regions, of the first surface. These first region(s) can, for example, define a "line" or boundary between other regions not in contact with the anode, the line having any dimension desired for later processing or use, e.g., mechanical cutting or desired breakage profile upon physical impact. The at least one first region can also have other shapes, e.g., circles, squares, rectangles, triangles, and other polygons, without limitation. In additional embodiments, the at least one first region can comprise the entire first surface. The at least one first region defines a pattern on the first surface, which can be random or arranged, repetitive or non-repetitive. For instance, the electrode can comprise a template or grid defining various "openings" which are not contacted with the anode. These openings can be of any shape and/or size, without limitation. According to various aspects, the openings can have a shape chosen from circles, squares, rectangles, diamonds, triangles, hexagons, and other polygons, to name a few. The patter can, in some embodiments, be selected from the group consisting of regular, repeating, or periodic patterns (e.g., lines, gratings, arrays, channels, concentric features, circles, squares, rectangles, triangles, hexagons, and combinations thereof); engineered, designed, or hierarchical structures (e.g., lenses, gratings, waveguides, and light-guiding circuitry); irregular, random, pseudo-random or aperiodic patterns; or any of the like, and combinations thereof.

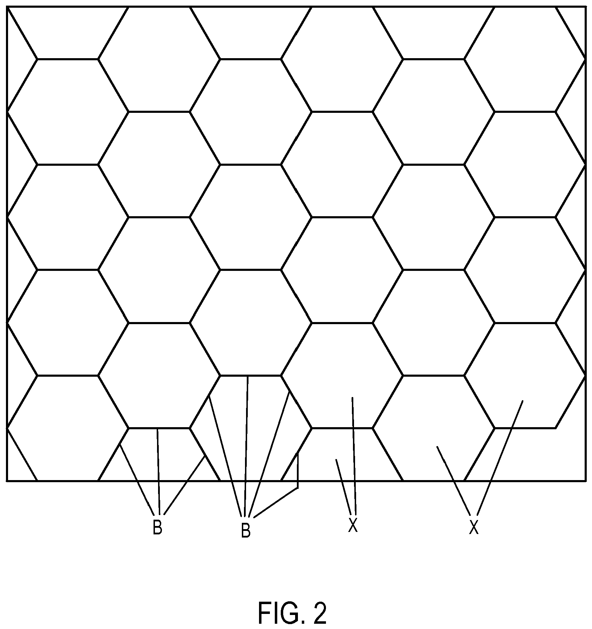

An exemplary pattern is depicted in **FIG. 2****,** in which a patterned electrode can be used to provide a repeating hexagonal pattern defined by a first region of low compressive stress (non-ion-exchanged or non-chemically-strengthened) **B** in the form of lines, which separate hexagonal regions of high compressive stress (ion-exchanged or chemically-strengthened) **X.** Without wishing to be bound by theory, it is believed that, upon impact, e.g., dropping, collision, etc., a glass substrate so patterned can break along the predetermined low compressive stress lines, which would result in small glass pieces with rounded corners or substantially free of sharp corners. As used herein "rounded" corners refers to fragment corners having an obtuse angle (e.g., greater than about 90°), whereas "sharp" corners refer to fragment corners having an acute angle (e.g., less than about 90°. Of course, the exemplary illustrated pattern is presented herein for purposes of discussion only and should not be construed as limiting on the appended claims. It is also to be understood that the methods disclosed herein can be modified to obtain any desired breakage pattern, e.g., shapes having acute corners or ultra-sharp, highly acute corners, and so forth.

The second electrode (or cathode) can be patterned in a manner similar to the first electrode to create corresponding regions on an opposing second surface. In other embodiments, the entire second surface can be covered by the second electrode, e.g., as illustrated in **FIG. 1****.** Thus, as depicted in **FIG. 1****,** the treated substrate can comprise a first surface having non-ion-exchanged (e.g., non-chemically-strengthened) regions **B** and ion-exchanged (e.g., chemically-strengthened) regions **X,** and the entire second surface can be ion exchanged (e.g., chemically strengthened) or, in other embodiments, only a portion of the second surface may be ion exchanged (e.g., chemically strengthened). Patterns for each electrode can be achieved using a variety of methods, for example, shadow masking, lift-off, lithographic etching, and micro-printing techniques for depositing films, mechanical machining of bulk materials, to name a few. According to various embodiments, it may be advantageous to substantially match the curvature and/or flatness of the substrate and the electrodes to provide intimate contact at the interface. However, in some embodiments, initial contact may not be intimate and there may be a difference in curvature between the substrate and the electrodes, e.g., in the case of a machined metal electrode with a substantially flat surface and a substrate with a degree of curvature, and vice versa. In such instances, an electrostatic charge at the interface can pull the two surfaces into intimate contact when voltage is applied.

The methods disclosed herein can further include a step of bringing the substrate, e.g., the anode/substrate/cathode stack, to a predetermined temperature before application of voltage. In certain embodiments, the substrates comprising glass can be heated or cooled to any temperature below the T_{g} of the substrate, this temperature varying depending on the selected substrate composition and/or the desired thermal poling effect to be achieved. Thermal poling can thus be carried out at any temperature ranging from room temperature (about 25°C), e.g., little or no heat applied, up to a temperature below T_{g} (which will vary depending on the composition). According to non-limiting examples, the substrate can be heated to a temperature ranging from about 100°C to about 350°C, such as from about 125°C to about 325°C, from about 150°C to about 300°C, from about 175°C to about 275°C, or from about 200°C to about 250°C, including all ranges and subranges therebetween. In further embodiments, the substrate can be allowed to equilibrate at a given temperature for a time period sufficient to ensure temperature uniformity across the substrate, e.g., from about 5 minutes to about 60 minutes, such as from about 10 minutes to about 45 minutes, or from about 15 minutes to about 30 minutes, including all ranges and subranges therebetween.

After assembly, heating and/or, equilibrating, voltage can be applied to the electrodes (or substrate-electrode stack) such that the anode is positively biased relative to the substrate. According to various embodiments a DC voltage or an AC voltage with a DC bias may be applied to the stack. The voltage can be applied for a time period ranging, for example, from less than about a minute to several hours or more. In certain embodiments, the time period can range from about 1 minute to about 60 minutes, such as from about 5 minutes to about 45 minutes, from about 10 minutes to about 30 minutes, or from about 15 minutes to about 20 minutes, including all ranges and subranges therebetween. The magnitude of voltage can vary depending, e.g., upon the substrate composition and/or the desired processing time, to name a few factors. By way of a non-limiting example, the voltage can range from about 100V to about 10,000V, such as from about 500V to about 9,000V, from about 1,000V to about 8,000V, from about 2,000V to about 7,000V, from about 3,000V to about 6,000V, or from about 4,000V to about 5,000V, including all ranges and subranges therebetween. In certain embodiments, voltages less than about 1,000V may be used, for instance, less than about 900V, less than about 800V, less than about 700V, less than about 600V, less than about 500V, less than about 400V, less than about 300V, less than about 200V, or less than about 100V, including all ranges and subranges therebetween. Voltage may be applied in one or more discrete steps to achieve the maximum desired value or ramped in a controlled/current-limited manner up to the desired value. These approaches may be advantageous and may potentially circumvent any potential thermal dielectric breakdown of the substrate due to the passage of too much current through the substrate, particularly in the case of low-resistivity substrates. These approaches can therefore allow for a higher final poling voltage and potentially thicker surface barrier layers. However, it is also envisioned that voltage can be applied all at once, e.g., an "instant-on" approach. Because breakdown strength can vary with substrate composition, this approach can be suitable for certain compositions and can, in some embodiments, present a more convenient alternative.

After poling the substrate for a predetermined period of time, the substrate can be cooled, e.g., to a temperature ranging from about 25°C to about 100°C, such as from about 30°C to about 80°C, or from about 40°C to about 60°C, including all ranges and subranges therebetween. The voltage may be removed prior to the cooling step or, in some embodiments, the voltage can be removed after the substrate is cooled. After cooling the substrate can be further processed, for instance, the substrate can be separated from the electrodes and then chemically strengthened.

Apparatuses suitable for thermal poling can comprise any system capable of simultaneously supplying and maintaining heat and voltage to a substrate-electrode stack in a controlled manner. In certain embodiments, the apparatus can also avoid practical problems such as leakage current paths or arcing. In additional embodiments, the apparatus can also control the process atmosphere, for example, maintain a vacuum, or provide an atmosphere comprising an inert gas (e.g., N₂) or a permeable gas (e.g., He). According to various embodiments, an inert or permeable gas atmosphere may be desirable to minimize atmospheric effects on the substrate-electrode interface (e.g., oxidation) and/or occluded gas at the substrate-electrode interface.

As discussed herein, voltage can be applied to the electrodes such that the anodic surface is positively biased relative to the substrate. The positive bias can induce an ion migration at the anodic interface, such that mobile ions (e.g., alkali, alkaline earth, and/or transition metal ions) migrate away from the anodic surface and towards the cathodic surface. The anodic surface can thus, after poling, comprise a layer (blocking or barrier layer) that is substantially free of such mobile ions. Portions of the substrate surface not in contact with the anode will not or will not substantially develop the same barrier layer. As such, when the surface is chemically strengthened by ion exchange, the treated anodic surfaces comprising the barrier layer will be devoid or substantially devoid of mobile cations for the ion exchange process, which is discussed in more detail below. However, the portions of the substrate surface that do not comprise the barrier layer can have available ions for ion exchange. Thus, the first region(s) (e.g., anodic surface region(s)) may not be chemically strengthened by the ion exchange process, whereas the other regions of the substrate (e.g., untreated and/or cathodic region(s)) can be chemically strengthened by ion exchange.

Accordingly, referring to **FIG. 1** for purposes of discussion, thermal poling of at least one region on a first surface of a substrate followed by chemical strengthening by ion exchange can produce a substrate having a first surface comprising non-chemically-strengthened regions **B** and chemically-strengthened regions **X.** Additionally, it is noted that the non-chemically-strengthened regions are substantially devoid not only of the mobile ions originally present (M1, e.g., Na, by way of a non-limiting example), but also devoid of the ions used in the ion exchange process (M2, e.g., K, by way of a non-limiting example). Thus, methods according to the instant disclosure not only inhibit diffusion of M1 through an M1-depleted surface layer, but also inhibit the diffusion of other metal ions M2 through an M1-depleted surface layer. This is particularly surprising given the aggressive conditions under which ion exchange can be performed, e.g., molten salt baths at elevated temperatures for extended treatment periods.

After thermal poling, the patterned substrate **G2** can be treated by ion exchange. Ion exchange can provide various advantages, e.g., chemical strengthening of a substrate, alteration of optical properties and/or fracture behavior of a substrate, and/or dimensional correction of a substrate, such as correcting or reducing warping in the substrate. During the ion exchange process, ions within a substrate, e.g., a glass sheet, at or near the surface of the substrate may be exchanged for larger ions, for example, from a salt bath. The incorporation of the larger ions into the substrate can strengthen the substrate by creating a compressive stress in a near surface region. A corresponding tensile stress can be induced within a central region of the substrate to balance the compressive stress.

Ion exchange may be carried out, for example, by immersing the substrate in a molten salt bath for a predetermined period of time. Exemplary salt baths include, but are not limited to, KNO₃, LiNOs, NaNO₃, RbNO₃, AgNO₃, K₂SO₄, LiSO₄, NaSO₄, LiCI, NaCl, KCI and combinations thereof. Other molten salts comprising ions chosen from Cu⁺, Rb⁺, Cs⁺, or Th⁺ can also be used. The temperature of the molten salt bath and treatment time period can vary. It is within the ability of one skilled in the art to determine process variables such as time and temperature according to the desired application. By way of a non-limiting example, the temperature of the molten salt bath may range from about 350°C to about 800°C, such as from about 400°C to about 600°C, or from about 450°C to about 500°C, including all ranges and subranges therebetween. The treatment time period may range from about 0.2 to about 24 hours, such as from about 4 hours to about 12 hours, or from about 6 hours to about 10 hours, including all ranges and subranges therebetween. However, other temperature and time combinations are envisioned and are intended to fall within the scope of the disclosure. By way of a non-limiting example, the substrate can be submerged in a KNO₃ bath, for example, at about 450°C for about 6 hours, to obtain a K-enriched layer which imparts a surface compressive stress. Of course, while ion exchange is discussed herein using molten salt baths as a non-limiting example, it is to be understood that any other method for ion exchanging, e.g., chemically strengthening, the substrate is possible and envisioned as falling within the scope of the disclosure.

According to various embodiments, the chemically-strengthened regions of the substrate may have a compressive stress greater than about 100 MPa and a depth of layer of compressive stress (DOL) greater than about 10 microns. In further embodiments, the substrate may have a compressive stress greater than about 500 MPa and a DOL greater than about 15 microns, or a compressive stress greater than about 750 MPa and a DOL greater than about 40 microns.

### Ion-Exchanged Substrates

Disclosed herein are glass substrates comprising a first surface having at least one non-chemically-strengthened region and a second surface having at least one chemically-strengthened region, wherein the at least one chemically-strengthened region comprises metal ions, and wherein the at least one non-chemically-strengthened region is substantially free of the metal ions. In certain embodiments, the first surface can comprise a plurality of first chemically-strengthened regions comprising the metal ions and separated at least in part by the at least one non-chemically-strengthened region substantially free of the metal ions.

Also disclosed herein are glass substrates comprising at least one surface having a plurality of chemically-strengthened regions separated at least in part by at least one non-chemically-strengthened region, wherein the plurality of chemically-strengthened regions comprise metal ions, and wherein the at least one non-chemically-strengthened region does not comprise the metal ions. Further disclosed herein are substrates comprising a first surface having at least one non-ion-exchanged region and a second surface having at least one ion-exchanged region, wherein the at least one ion-exchanged region comprises mobile ions, and wherein the at least one non-ion-exchanged region is substantially free of the mobile ions.

The substrate, before processing, can be chosen from any untreated or starting material ("parent" composition) comprising mobile ions such as metal ions chosen from alkali, alkaline earth, and/or transition metal ions (see, e.g., **G1** in **FIG. 1**). Non-limiting examples of parent compositions can include, for example, glasses, such as alkali or alkaline earth silicates, aluminosilicates, borosilicates, and boroaluminosilicates, as well as more complex multi-component glasses able to form an altered surface layer by the thermal poling process; glass-ceramics comprising such glass materials; and ceramics, e.g., ionically conductive ceramics. The substrate **G1** can be made using any conventional melt processing methods or can be otherwise provided or purchased.

For example, glass batch materials can be melted according to any method known in the art, such as adding the batch materials to a melting vessel and heating to a temperature ranging from about 1100°C to about 1700°C, such as from about 1200°C to about 1650°C, from about 1250°C to about 1600°C, from about 1300°C to about 1550°C, from about 1350°C to about 1500°C, or from about 1400°C to about 1450°C, including all ranges and subranges therebetween. The batch materials may, in certain embodiments, have a residence time in the melting vessel ranging from several minutes to several hours, depending on various variables, such as the operating temperature and the batch size. For example, the residence time may range from about 30 minutes to about 8 hours, from about 1 hour to about 6 hours, from about 0.2 hours to about 5 hours, or from about 3 hours to about 4 hours, including all ranges and subranges therebetween.

The term "glass batch materials" and variations thereof is used herein to denote a mixture of glass precursor components which, upon melting, react and/or combine to form a glass. The glass batch materials may be prepared and/or mixed by any known method for combining glass precursor materials. For example, in certain non-limiting embodiments, the glass batch materials can comprise a dry or substantially dry mixture of glass precursor particles, e.g., without any solvent or liquid. In other embodiments, the glass batch materials may be in the form of a slurry, for example, a mixture of glass precursor particles in the presence of a liquid or solvent. According to various embodiments, suitable batch materials may comprise glass precursor materials, such as silica, alumina, and various additional oxides, such as sodium, potassium, lithium, cesium, magnesium, calcium, strontium, barium, boron, tin, and/or titanium oxides. For instance, the glass batch materials may comprise a mixture of silica and/or alumina with one or more additional oxides. In various embodiments, the glass batch materials can comprise from about 45 to about 95 wt% collectively of alumina and/or silica and from about 5 to about 55 wt% collectively of at least one oxide of sodium, potassium, lithium, cesium, magnesium, calcium, strontium, barium, boron, tin, and/or titanium.

The melted glass can subsequently undergo various additional processing steps, including fining to remove bubbles, and stirring to homogenize the glass melt, to name a few. The molten glass can then be processed to produce a glass ribbon according to any method known in the art, including, e.g., fusion draw, slot draw, or float methods. A pull roll assembly can deliver the drawn glass ribbon for further processing by additional apparatuses. For example, the glass ribbon can be further processed by a traveling anvil machine (TAM), which can include a mechanical scoring device for scoring the glass ribbon. The scored glass can then be separated into pieces of glass sheet, machined, polished, and/or otherwise processed using various methods and devices known in the art.

Of course, other substrates, such as glass-ceramic and ceramic substrates, can also be made by processing any suitable batch materials using conventional methods or can be otherwise provided or purchased. For example, ceramic substrates can be produced by combining inorganic ceramic batch materials, forming a green body, and firing the green body according to a desired firing schedule to provide a ceramic substrate. A substrate **G1** formed from these exemplary batch materials can comprise, in some embodiments, at least about 3% by weight of at least one mobile ion, e.g., metal ions chosen from alkali, alkaline earth, and transition metal ions, such as Na, K, Li, Cs, Mg, Ca, Sr, Ba, or Ag. According to various non-limiting embodiments, the substrate **G1** can comprise from about 3% to about 20% by weight of mobile ions, such as from about 4% to about 18%, from about 5% to about 16%, from about 6% to about 15%, from about 7% to about 14%, from about 8% to about 13%, from about 9% to about 12%, or from about 10% to about 11% by weight, including all ranges and subranges therebetween.

The substrate **G1** is not limited in terms of dimensions, e.g., height, length, thickness, and so on. In some embodiments, the substrate can be a sheet, such as a rectangular or square glass sheet. According to various embodiments, the substrate can have a thickness of less than about 5 mm, such as less than about 4 mm, less than about 3 mm, less than about 2 mm, or less than about 1 mm, including all ranges in between. For instance, the thickness can range from about 0.05 mm to about 3 mm, from about 0.1 mm to about 2.5 mm, from about 0.3 mm to about 2 mm, from about 0.5 mm to about 1.5 mm, or from about 0.7 mm to about 1 mm, including all ranges and subranges therebetween. The substrate is furthermore not limited in terms of shape and can, for example, comprise one or more planar or non-planar surfaces. The substrate may have a single radius of curvature or multiple radii, such as two, three, four, five, or more radii. The radius of curvature may, in some embodiments, range from about 50 mm to about 1,000 mm, such as from 100 mm to about 500 mm, or from about 200 mm to about 300 mm, including all ranges and subranges therebetween
As discussed above, the substrate **G1** can be thermally poled using a variety of methods and configurations to obtain a desired ion exchange, e.g., compressive stress, pattern on one or more of the surfaces. In some embodiments, such as that illustrated in **FIG. 1****,** the substrate can comprise a first surface comprising a plurality of ion-exchanged (e.g, chemically-strengthened) regions **X** separated by at least one non-ion-exchanged (e.g., chemically-strengthened) region **B.** A second surface of the substrate can be ion exchanged (e.g., chemically strengthened) in whole or in part. For example, a cathode can be placed in contact with the second surface during thermal poling that covers all or a part of the surface. In some embodiments, the cathode can be patterned to mimic the pattern of the anode. In other embodiments, the substrate can be asymmetric, e.g., the entire first surface can be non-ion-exchanged (e.g., non-chemically-strengthened) and the entire second surface can be ion-exchanged (e.g., chemically-strengthened). Such substrates may be beneficial to dimensional correction or other specialized applications where a substrate with a single ion-exchanged or chemically-strengthened surface is desirable.

According to additional embodiments, during the ion exchange process, all or a part of the second surface can be treated to block ion exchange. For instance, one or more thin films can be applied to the surface as a barrier layer to ion exchange. Suitable films can include oxide coatings, e.g., ZnO, ITO, ZrO, and other materials known to impede or block the ion exchange process. The film can, in some embodiments, be a thin film with a thickness less than about 100 nm, such as less than about 30 nm, or less than about 10 nm, including all ranges and subranges therebetween. Accordingly, while the anodic (first) surface can have an intrinsic barrier layer created by thermal poling, the cathodic (second) surface can, in some embodiments, have an extrinsic, e.g., applied, barrier layer. Of course, the first surface can also be similarly treated after thermal poling if so desired. It should be noted, however, that extrinsically blocked surfaces, while avoiding ion exchange, and thus the incorporation of ions M2 from the ion exchange process, can still comprise the mobile ions M1 originally present in the substrate. In contrast, intrinsic barrier layers created, e.g., by thermal poling, can be substantially devoid of both the original mobile ions M1 and the ions M2 that would otherwise be introduced by ion exchange.

The substrate can, in various embodiments, comprise at least one surface having at least one chemically-strengthened region and at least one non-chemically-strengthened region. For instance, at least one surface can comprise a plurality of chemically-strengthened regions separated at least in part by one or more non-chemically strengthened regions. The opposing surface can be chemically-strengthened, non-chemically-strengthened, or a combination thereof. For example, application of extrinsic barrier layers, e.g., thin oxide films or any other suitable blocking means, to the entire second surface can yield a substrate having one surface comprising a plurality of chemically-strengthened regions separated by at least one non-chemically-strengthened region and an opposing non-chemically-strengthened surface. Various combinations of electrode configurations and/or subsequent application of barrier layers can yield numerous combinations of surfaces with different arrangements of chemically-strengthened and non-chemically-strengthened regions, all of which are envisioned as falling within the scope of the disclosure and appended claims.

Of course it is also possible to use alternative or additional techniques for selective ion exchange including, for example, the extrinsic barrier layer methods discussed above, as well as, e.g., thermal treatment of a chemically-strengthened surface after ion exchange. Local heat treatment can increase the local temperature to above the annealing point. At high temperatures, surface compressive stress can relax. Thus, low compressive stress patterns can be created on a chemically-strengthened surface. Another alternative approach comprises using field-assisted ion exchange processes to achieve a patterned ion-exchanged surface. A patterned electrode can be used as a reservoir for the ion to be exchanged into the substrate (e.g., a silver electrode can be used for Ag-for-Na ion exchange). The patterned electrode can be subjected to heat and voltage similar to that described above for thermal poling methods. However, instead of creating a barrier layer, the substrate can instead be selectively ion exchanged only where the electrode is in contact with the substrate, e.g., the electrode "guest" ions can be driven into the substrate by the field-assisted mechanism. The above approaches can be employed multiple times, in any combination, and without limitation, to achieve a desired compressive stress pattern on one or more of the substrate surfaces.

The ion-exchanged substrates disclosed herein can have various advantages as compared to traditional chemically-strengthened substrates. For instance, the disclosed substrates can be processed by manufacturers as full sheets instead of as piece-parts. According to various embodiments, the disclosed substrates can be cut using conventional mechanical methods such as scoring and cutting and may not require the use of specialized equipment for end-use processing. The disclosed methods can also provide for low cost and/or high throughput manufacturing due to the relatively low temperatures, relatively low voltages, relatively low consumption of electrical energy, and/or relatively short processing times. Moreover, in the case of machined press-contact electrodes, a desired pattern can be applied to multiple substrates using a simple apparatus and a single process step. Finally, the methods disclosed herein can be compatible with conventional ion exchange methods and equipment, thus avoiding additional expense and/or complexity. Of course, the substrates and methods disclosed herein may not have one or all of the above-disclosed advantages but are still intended to fall within the scope of the appended claims.

It will be appreciated that the various disclosed embodiments may involve particular features, elements or steps that are described in connection with that particular embodiment. It will also be appreciated that a particular feature, element or step, although described in relation to one particular embodiment, may be interchanged or combined with alternate embodiments in various non-illustrated combinations or permutations.

It is also to be understood that, as used herein the terms "the," "a," or "an," mean "at least one," and should not be limited to "only one" unless explicitly indicated to the contrary. Thus, for example, reference to "a region" includes examples having two or more such regions unless the context clearly indicates otherwise. Likewise, a "plurality" or an "array" is intended to denote "more than one." As such, a "plurality" or "array" of regions includes two or more such regions, such as three or more such regions, etc. Ranges can be expressed herein as from "about" one particular value, and/or to "about" another particular value. When such a range is expressed, examples include from the one particular value and/or to the other particular value. Similarly, when values are expressed as approximations, by use of the antecedent "about," it will be understood that the particular value forms another aspect. It will be further understood that the endpoints of each of the ranges are significant both in relation to the other endpoint, and independently of the other endpoint.

The terms "substantial," "substantially," and variations thereof as used herein are intended to note that a described feature is equal or approximately equal to a value or description. For example, a "substantially planar" surface is intended to denote a surface that is planar or approximately planar. Moreover, as defined above, "substantially similar" is intended to denote that two values are equal or approximately equal.

While various features, elements or steps of particular embodiments may be disclosed using the transitional phrase "comprising," it is to be understood that alternative embodiments, including those that may be described using the transitional phrases "consisting" or "consisting essentially of," are implied. Thus, for example, implied alternative embodiments to a method that comprises A+B+C include embodiments where a method consists of A+B+C and embodiments where a method consists essentially of A+B+C.

It will be apparent to those skilled in the art that various modifications and variations can be made to the present disclosure without departing from the scope of the disclosure. Since modifications combinations, sub-combinations and variations of the disclosed embodiments incorporating the substance of the disclosure may occur to persons skilled in the art, the disclosure should be construed to include everything within the scope of the appended claims.

The following Example is intended to be non-restrictive and illustrative only, with the scope of the invention being defined by the claims.

### EXAMPLES

An exemplary method was carried out using square sheets of non-chemically strengthened alkali aluminosilicate glass from Corning Incorporated (101.6 mm x 101.6 mm x 1.0 mm). The Visqueen protective film was removed from the surface and the sample was washed using a standard 4% Semiclean KG process on the Big Dipper. A bulk high-purity platinum monolith was obtained and polished to an optical finish. The monolith was placed in simple contact with the glass surface for use as the anode. On the opposing side, a graphite foil (Grafoil®) was placed in simple contact with the surface for use as the cathode. Both the anode and the cathode measured 63.5 mm x 63.5 mm and thus did not cover the entire glass surface on either side of the sample, such that portions of each surface remained unpoled.

The anode, glass sheet, and cathode were loosely stacked and placed in a chamber with an inert nitrogen atmosphere. The stack was heated to 250°C and allowed to equilibrate at this temperature for 15 minutes. DC voltage (+400V) was applied to the anode, with current limited to a maximum of 1 mA. An initial increase in current was observed, followed by a slow decay as a depletion (barrier) layer formed on the anodic surface. Voltage was applied to the stack for a period of 15 minutes, after which the heater was shut off and the stack was allowed to cool under voltage to a temperature below 100°C. The voltage was then discontinued, the chamber was vented, and the stack was manually separated.

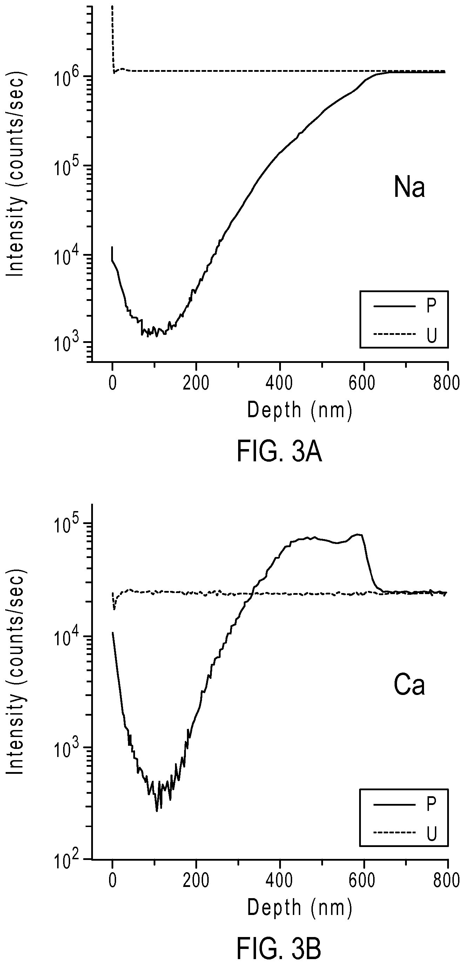

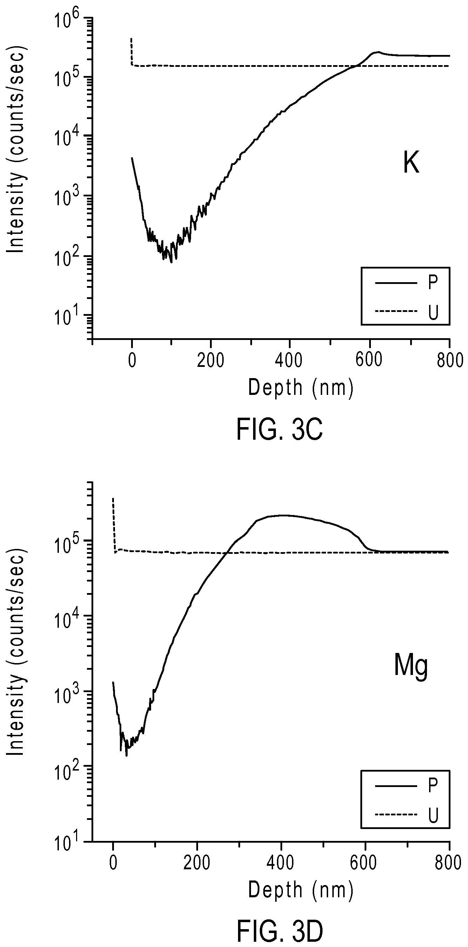

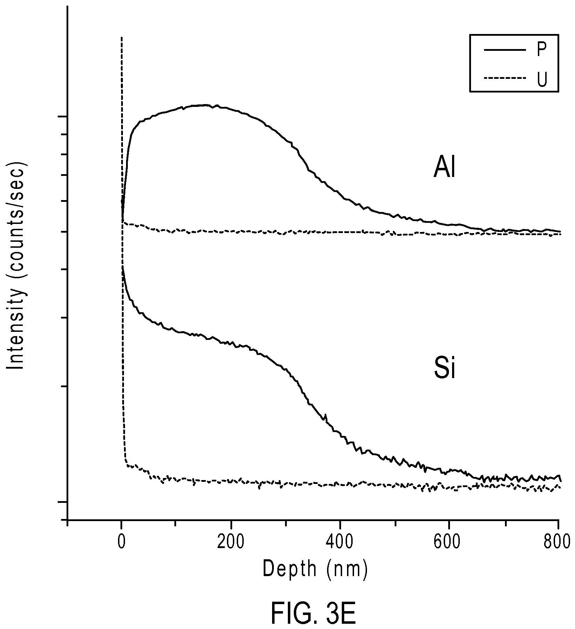

Sections of the glass sheet comprising both poled (e.g., between the electrodes) and unpoled (e.g., outside of the electrodes) regions were cut from the sample. The poled and unpoled regions were analyzed for the presence of a barrier layer. The results of these analyses are presented in **FIG. 3A-E****,** which depict the elemental depth profiles as measured by secondary ion mass spectrometry (SIMS) for the poled **P** and unpoled **U** regions on the anodic side of the glass sheet. **FIGS. 3A-D** demonstrate a significant depletion of metal ions (e.g., Na, Ca, K, Mg) at depths as high as 600 nm for the poled **P** anodic region as compared to the unpoled **U** anodic region. A corresponding increase in concentration of other glass components (e.g., Al, Si) was also demonstrated for the poled **P** anodic region as compared to the unpoled **U** anodic region, as depicted in **FIG. 3E****.** As such, **FIGS. 3A-E** demonstrate that a nanoscale depletion or barrier layer can be selectively formed on the anodic surface using thermal poling.

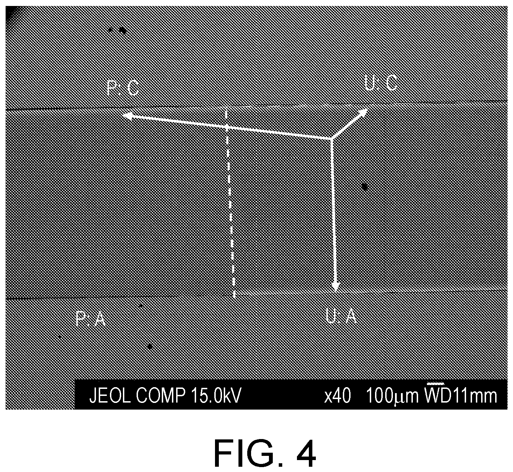

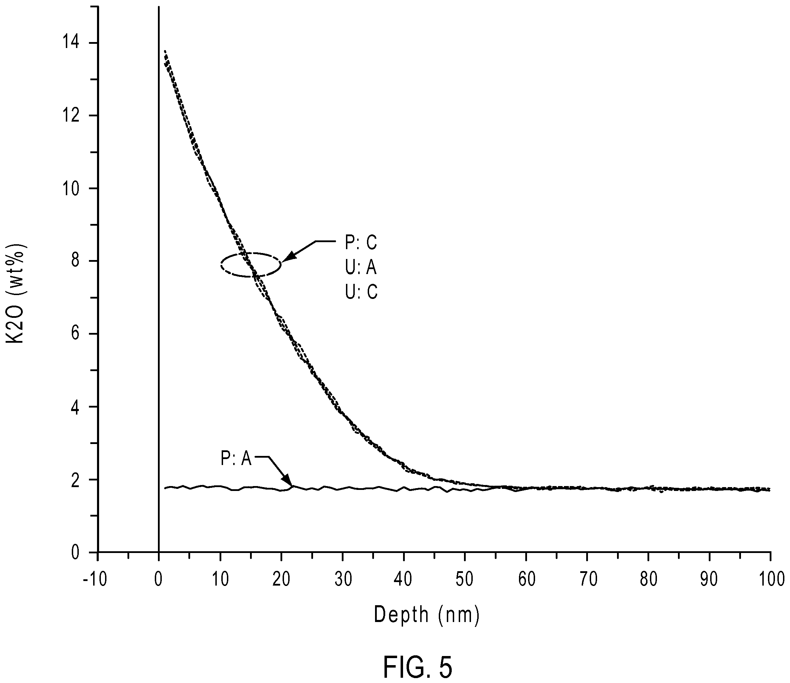

The sample was subsequently chemically-strengthened by a standard ion exchange process. The glass was immersed in a molten salt bath of 100% KNO₃ at 420°C for 5.5 hours and subsequently rinsed. The glass was then analyzed using scanning electron microscopy (SEM) and an electron microprobe analysis (EMPA). **FIG. 4** is an SEM image of a cross-section of the glass sheet comprising poled and unpoled (untreated) regions. Bright white regions at the edges are indicative of successful ion exchange (K-for-Na). Notably, these white regions are visible on both sides of the cathodic surface (poled **P: C** and unpoled **U: C**) but visible only on the unpoled side of the anodic surface **(U: A).** **FIG. 4** thus demonstrates that the barrier layer selectively formed on the poled region of the anodic surface (**P: A**) effectively blocked ion exchange that otherwise took place on the other surfaces. **FIG. 5** illustrates overlaid EMPA linescans of K₂O concentration for each of the regions. Again, whereas the poled and unpoled cathodic surfaces (**P: C, U: C**) and unpoled anodic surface (**U: A**) exhibited nearly identical EMPA curves, the poled anodic surface (**P: A**) exhibited a flat-line effect, e.g., was substantially free of K₂O (less than about 2 wt% at all measured depths). **FIG. 5** thus also demonstrates that the barrier layer selectively formed on the poled region of the anodic surface effectively inhibited ion exchange (K-for-Na) as well as K-migration through the Na-depleted barrier layer.

Compressive stress (CS) and depth of layer (DOL) were measured for each of the four regions depicted in **FIG. 4** using a surface stress meter (FSM) and are presented in Table I below.

**Table I: CS and DOL Values for Poled/Unpoled Regions**

| Surface | Stress-optic coefficient | CS (MPa) | DOL (µm) |
|---|---|---|---|
| Unpoled Anode Region **U: A** | 29.4 | 794.2 | 43.7 |
| Unpoled Cathode Region **U: C** | | 791.8 | 43.8 |
| Poled Anode Region **P: A** (positive-biased/anode surface) | | Not measurable (0.0) | Not measurable (0.0) |
| Poled Cathode Region **P: C** (negative-biased/cathode surface) | | 613.0 | 38.0 |

The measured CS and DOL for the unpoled regions were within the expected range, while the poled anodic region had no measurable CS or DOL, thus confirming the inhibition of ion-exchange. The poled cathodic surface showed CS and DOL values close to that of the unpoled regions, albeit slightly lower. This discrepancy is, however, suspected to be a measurement artifact due to low signal-to-noise ratio and/or imperfect optical measurement conditions possibly due to graphite residues on the glass sheet (particularly in light of the fact that the K₂O profile for this region matched those of the unpoled regions as measured by EMPA (see **FIG. 5**)).

## Claims

1. A method for chemically strengthening a glass substrate, comprising:
applying a first electrode to at least one first region on a first surface of a glass substrate, the at least one first region being a portion of the first surface and defining a pattern on the first surface;
applying a second electrode to at least one second region on a second surface of the glass substrate, wherein the glass substrate comprises metal ions and the first and second surfaces comprise opposing sides of the glass substrate;
applying voltage between the first and second electrodes sufficient to cause at least a portion of the metal ions to migrate away from the at least one first region on the first surface; and
after the step of applying voltage, chemically strengthening the glass substrate by ion exchange,
wherein, after the chemical strengthening step, the first surface has a pattern of chemically strengthened regions.

2. The method of claim 1, wherein the metal ions are chosen from alkali metal ions, alkaline earth metal ions, transition metal ions, and combinations thereof.

3. The method of claim 1, further comprising bringing the glass substrate to a temperature less than a glass transition temperature of the glass substrate before applying voltage.

4. The method of claim 1, wherein chemically strengthening comprises immersing the glass substrate in a salt bath having a temperature ranging from about 350°C to about 800°C for a time period ranging from about 0.2 hours to about 24 hours.

5. The method of claim 4, wherein the salt bath comprises at least one salt chosen from KNO₃, LiNO₃, NaNO₃, RbNO₃, AgNO₃, K₂SO₄, LiSO₄, NaSO₄, LiCl, NaCl, KCl, and combinations thereof.

6. The method of claim 1, wherein the first electrode is an anode and the second electrode is a cathode, and wherein the first and second electrodes independently comprise at least one material chosen from graphite, gold, silver, steel, platinum, palladium, and alloys thereof.

7. The method of claim 1, wherein the voltage ranges from about 100V to about 10,000V and is applied for a time period ranging from about 1 minutes to about 60 minutes.

8. The method of any one of the preceding claims, wherein the pattern of the at least one region is a regular, repeating, or periodic pattern; an engineered, designed, or hierarchical pattern; an irregular, random, pseudo-random, or aperiodic pattern; or any combination thereof.

9. The method of any one of claims 1-7, wherein the at least one first region comprises the entire first surface of the glass substrate.

10. An automobile windshield comprising a glass substrate produced according to the method of any of claims 1 to 9.

11. The automobile windshield of claim 10, wherein the metal ions are chosen from alkali metal ions, alkaline earth metal ions, transition metal ions, and combinations thereof.

12. The automobile windshield of claim 10, wherein the pattern the at least one non-chemically-strengthened region is a regular, repeating, or periodic pattern; an engineered, designed, or hierarchical pattern; an irregular, random, or pseudo-random or aperiodic pattern; or any combination thereof.

13. The automobile windshield of claim 10, wherein the at least one chemically-strengthened region has a compressive stress greater than about 100MPa and a depth of layer greater than about 10 microns.

## Patentansprüche

1. Verfahren zum chemischen Verstärken eines Glassubstrats, umfassend:
Anbringen einer ersten Elektrode auf mindestens einem ersten Bereich auf einer ersten Oberfläche eines Glassubstrats, wobei es sich bei dem mindestens einen ersten Bereich um einen Teil der ersten Oberfläche handelt, und er ein Muster auf der ersten Oberfläche bildet;
Anbringen einer zweiten Elektrode auf mindestens einem zweiten Bereich auf einer zweiten Oberfläche des Glassubstrats, wobei das Glassubstrat Metallionen umfasst, und die erste und zweite Oberfläche entgegengesetzte Seiten des Glassubstrats umfassen;
Anlegen einer Spannung zwischen der ersten und zweiten Elektrode, die ausreicht, um zu bewirken, dass zumindest ein Teil der Metallionen von dem mindestens einen ersten Bereich auf der ersten Oberfläche weg wandert; und
nach dem Schritt des Anlegens von Spannung, chemisches Verstärken des Glassubstrats durch Ionenaustausch,
wobei, nach dem Schritt des chemischen Verstärkens die erste Oberfläche ein Muster aus chemisch verstärkten Bereichen hat.

2. Verfahren nach Anspruch 1, wobei die Metallionen aus Alkalimetallionen, Erdalkalimetallionen, Übergangsmetallionen und Kombinationen von diesen ausgewählt sind.

3. Verfahren nach Anspruch 1, darüber hinaus umfassend, das Glas vor dem Anlegen von Spannung auf eine Temperatur zu bringen, die geringer ist als eine Glasübergangstemperatur des Glassubstrats.

4. Verfahren nach Anspruch 1, wobei das chemische Verstärken umfasst, das Glassubstrat über einen Zeitraum, der von ca. 0,2 Stunden bis zu ca. 24 Stunden reicht, in ein Salzbad mit einer Temperatur einzutauchen, die von ca. 350° C bis 800° C reicht.

5. Verfahren nach Anspruch 4, wobei das Salzbad mindestens ein Salz umfasst, das aus KNO₃, LiNO₃, NaNO₃, RbNO₃, AgNO₃, K₂SO₄, LiSO₄, NaSO₄, LiCl, NaCl, KCl und Kombinationen von diesen ausgewählt ist.

6. Verfahren nach Anspruch 1, wobei die erste Elektrode eine Anode und die zweite Elektrode eine Kathode ist, und wobei die erste und zweite Elektrode unabhängig mindestens ein Material umfassen, das aus Graphit, Gold, Silber, Stahl, Platin, Palladium und Legierungen von diesen ausgewählt ist.

7. Verfahren nach Anspruch 1, wobei die Spannung von ca. 100 V bis ca. 10.000 V reicht und über einen Zeitraum angelegt wird, der von ca. 1 Minute bis ca. 60 Minuten reicht.

8. Verfahren nach einem der vorhergehenden Ansprüche, wobei das Muster des mindestens einen Bereichs ein regelmäßiges, sich wiederholendes oder periodisches Muster; ein konstruiertes, entworfenes oder hierarchisches Muster; ein unregelmäßiges, zufälliges, pseuso-zufälliges oder aperiodisches Muster; oder irgendeine Kombination von diesen ist.

9. Verfahren nach einem der Ansprüche 1 bis 7, wobei der mindestens eine erste Bereich die gesamte erste Oberfläche des Glassubstrats umfasst.

10. Automobilwindschutzscheibe, die ein Glassubstrat umfasst, das nach dem Verfahren eines der Ansprüche 1 bis 9 hergestellt ist.

11. Automobilwindschutzscheibe nach Anspruch 10, wobei die Metallionen aus Alkalimetallionen, Erdalkalimetallionen, Übergangsmetallionen und Kombinationen von diesen ausgewählt sind.

12. Automobilwindschutzscheibe nach Anspruch 10, wobei das Muster des mindestens einen Bereichs ein regelmäßiges, sich wiederholendes oder periodisches Muster; ein konstruiertes, entworfenes oder hierarchisches Muster; ein unregelmäßiges, zufälliges, pseuso-zufälliges oder aperiodisches Muster; oder irgendeine Kombination von diesen ist.

13. Automobilwindschutzscheibe nach Anspruch 10, wobei der mindestens eine chemisch verstärkte Bereich eine Druckspannung, die größer ist als ca. 100 MPa, und eine Schichttiefe hat, die größer ist als ca. 10 Mikron.

## Revendications

1. Procédé de renforcement chimique d'un substrat de verre, comprenant :
l'application d'une première électrode à au moins une première région sur une première surface d'un substrat de verre, l'au moins une première région étant une partie de la première surface et définissant un motif sur la première surface ;
l'application d'une deuxième électrode à au moins une deuxième région sur une deuxième surface du substrat de verre, sachant que le substrat de verre comprend des ions de métal et la première et la deuxième surface comprennent des côtés opposés du substrat de verre ;
l'application, entre la première et la deuxième électrode, d'une tension suffisante pour faire en sorte qu'au moins une partie des ions de métal migrent en s'éloignant de l'au moins une première région sur la première surface ; et
après l'étape d'application d'une tension, le renforcement chimique du substrat de verre par échange d'ions,
sachant que, après l'étape de renforcement chimique, la première surface présente un motif de régions chimiquement renforcées.

2. Le procédé de la revendication 1, sachant que les ions de métal sont choisis parmi des ions de métal alcalin, des ions de métal alcalino-terreux, des ions de métal de transition, et leurs combinaisons.

3. Le procédé de la revendication 1, comprenant en outre l'amenée du substrat de verre à une température inférieure à une température de transition de verre du substrat de verre avant application d'une tension.

4. Le procédé de la revendication 1, sachant que le renforcement chimique comprend l'immersion du substrat de verre dans un bain de sel ayant une température allant d'environ 350 °C à environ 800 °C pendant une période allant d'environ 0,2 heure à environ 24 heures.

5. Le procédé de la revendication 4, sachant que le bain de sel comprend au moins un sel choisi parmi KNO₃, LiNO₃, NaNO₃, RbNO₃, AgNO₃, K₂SO₄, LiSO₄, NaSO₄, LiCl, NaCl, KCl, et leurs combinaisons.

6. Le procédé de la revendication 1, sachant que la première électrode est une anode et la deuxième électrode est une cathode, et sachant que la première et la deuxième électrode comprennent indépendamment au moins un matériau choisi parmi le graphite, l'or, l'argent, l'acier, le platine, le palladium, et leurs alliages.

7. Le procédé de la revendication 1, sachant que la tension va d'environ 100 V à environ 10 000 V et est appliquée pendant une période allant d'environ 1 minute à environ 60 minutes.

8. Le procédé de l'une quelconque des revendications précédentes, sachant que le motif de l'au moins une région est un motif régulier, répétitif, ou périodique ; un motif conçu, dessiné, ou hiérarchique ; un motif irrégulier, aléatoire, pseudo-aléatoire, ou apériodique ; ou toute combinaison de ceux-ci.

9. Le procédé de l'une quelconque des revendications 1 à 7, sachant que l'au moins une première région comprend la première surface entière du substrat de verre.

10. Pare-brise d'automobile comprenant un substrat de verre produit selon le procédé de l'une quelconque des revendications 1 à 9.

11. Le pare-brise d'automobile de la revendication 10, sachant que les ions de métal sont choisis parmi des ions de métal alcalin, des ions de métal alcalino-terreux, des ions de métal de transition, et leurs combinaisons.

12. Le pare-brise d'automobile de la revendication 10, sachant que le motif de l'au moins une région non renforcée chimiquement est un motif régulier, répétitif, ou périodique ; un motif conçu, dessiné, ou hiérarchique ; un motif irrégulier, aléatoire, pseudo-aléatoire, ou apériodique ; ou toute combinaison de ceux-ci.

13. Le pare-brise d'automobile de la revendication 10, sachant que l'au moins une région renforcée chimiquement présente une contrainte de compression supérieure à environ 100 MPa et une profondeur de couche supérieure à environ 10 microns.
